(19) Europäisches Patentamt
European Patent Office
Office européen des brevets

(11) **EP 2 105 852 A1**

(12) **DEMANDE DE BREVET EUROPEEN**

(43) Date de publication:
**30.09.2009 Bulletin 2009/40**

(51) Int Cl.:
*G06F 17/30* (2006.01)   *G06Q 10/00* (2006.01)
*G06F 17/27* (2006.01)

(21) Numéro de dépôt: **09154320.7**

(22) Date de dépôt: **04.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **26.03.2008 FR 0801661**

(71) Demandeur: **Thales**
**92200 Neuilly-sur-Seine (FR)**

(72) Inventeurs:
• **Gouttas, Catherine**
**92700 Colombes (FR)**
• **Benhadda, Hamid**
**92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(54)   **Procédé et système d'attribution de score**

(57)   Système pour mettre en oeuvre un procédé de « scoring » **caractérisé en ce qu'**il comporte au moins les éléments suivants des moyens de détection (20, 21, 22) des données à analyser, des moyens d'analyse (11) desdites données en exécutant les étapes du procédé selon la revendication 1, des moyens de stockage des données auxquelles sont attribuées un score.

FIG.2

**Description**

L'invention concerne un procédé et un système permettant d'attribuer un score à un élément dans un ensemble de données structurées provenant de données structurées et/ou de données non structurées (textes, images, paroles, etc. ...), les données non structurées étant transformées au cours d'une étape de prétraitement via un processus d'analyse automatique en données structurées. A partir de ce score, il est possible dans un système opérationnel, de déclencher une alerte ou d'engendrer d'autres actions de contrôle résultant de l'analyse obtenue par le procédé selon l'invention.

Dans la suite de la description, le terme structuré désigne un ensemble de données pouvant se mettre sous la forme d'une table relationnelle, représentée, par exemple, par une matrice rectangulaire R de dimensions $N \times M,$ où $N$ et M représentent respectivement le nombre de lignes et le nombre de colonnes de la matrice $R$.

L'invention s'applique notamment dans le domaine de l'analyse automatique de paramètres de l'analyse de l'information non-structurée lorsque les volumes d'information sont importants et ne peuvent pas faire l'objet d'une analyse manuelle.

Elle peut être mise en oeuvre pour des pages Web, des e-mails, des documents issus de traitement de textes, des fichiers multimédia, des fichiers vidéo, des fichiers textes, etc. Du point de vue technique, l'invention apporte une réponse aux problèmes de synthèse d'informations hétérogènes et aux problèmes de gestion des informations non-structurées.

Les informations non-structurées représentent aujourd'hui la majorité des données collectées et utilisées dans le monde professionnel. Elles jouent un rôle important dans la conduite des processus métier mais le fait que les informations non-structurées ne soient pas immédiatement disponibles et exploitables dans le cadre des processus constitue un handicap majeur.

Le codage de l'information non-structurée et le modèle utilisé dans ce codage (dimensions ou paramètres) permet un stockage en système de gestion de base de données ou SGBD et rend à ce titre les informations non-structurées disponibles et exploitables par les processus métier (processus décisionnels/processus opérationnels)

Dans de nombreux domaines, les sociétés sont conduites à générer, stocker et gérer de grandes quantités d'informations sous une forme électronique. L'accès à ces informations et la compréhension de ces dernières peuvent jouer un rôle important dans la prise de décisions à tous les niveaux de l'entreprise (stratégie marketing, stratégie commerciale, pilotage qualité, pilotage de la relation client, etc.). Ces informations se présentent, dans la plupart des cas, sous une forme non structurée qui ne permettent pas une analyse facile de leur contenu. Au vu du volume important de ces informations, la plupart des acteurs font appel à des techniques d'analyse automatique de textes.

Différentes méthodes sont connues dans l'art antérieur pour permettre la résolution des problèmes techniques apparaissant dans le champ de l'analyse automatique de textes. Cette analyse automatique porte, par exemple, sur l'analyse des sentiments et des opinions, sur l'analyse des risques, etc. Ainsi, il existe la technique de fusion multi-modale. Les sociétés ont en effet aujourd'hui besoin de méthodologies permettant de synthétiser de manière automatique des informations de nature différentes : textes et données structurées, paroles et données structurées, textes et paroles, etc.

A titre d'exemple, dans le domaine de la gestion de la relation clients, connue sous l'abréviation anglo-saxonne « CRM » pour «Customer Relationship Management », les sociétés ont besoin de mettre en relation les informations sur les besoins et les attentes des clients (issues d'appels téléphoniques, de courriers clients, de messages ou mails des clients, d'enquêtes, de forums, etc..) et les informations issues de l'analyse des données comportementales et démographiques. Cette mise en relation implique l'intégration et la synthèse de données hétérogènes non structurées telles que les données parole, les données textuelles d'une part et les données structurées d'autre part.

Il est aussi connu des méthodes de traitement d'informations hétérogènes. La question de l'hétérogénéité des données à traiter est liée non seulement à la multi-modalité mais aussi à l'hétérogénéité intrinsèque de chaque type de données. A titre d'exemple : si l'on s'intéresse aux données textuelles issues de l'écrit dans lesquelles des informations de type sentiments et opinions sont susceptibles d'être d'extraites, l'utilisateur est confronté à des textes libres - résumés de courriers, messages électroniques, ou verbatims clients d'appels téléphoniques, réponses ouvertes à des enquêtes d'opinion - qui consistent en des données fortement hétérogènes, en termes de source, de nature et de qualité, pour ce qui est des données structurées, et en termes de source, de nature ou de genre, de qualité, de registre de langue, et d'idiome, pour ce qui est de données non structurées.

Dès lors que l'on se situe dans une perspective d'analyse automatique, la prise en compte de cette hétérogénéité structurelle est un impératif méthodologique qui garantit l'efficacité et la qualité des résultats qui seront obtenus, en fin d'analyse, que celle-ci soit conduite à des fins décisionnelles et/ou opérationnelles. Il existe aussi des méthodes de modélisation de discours. L'extraction de sentiments et d'opinions au sein de flux de textes ou de paroles retranscrites imposent en effet de modéliser le discours.

Le brevet US 7 249 312 divulgue un procédé et un système permettant de donner un score à des données non structurées. L'auteur de ce brevet utilise une méthode de maximum de vraisemblance pour attribuer un score à des parties d'un document ou d'un flux, et agrège ensuite les scores obtenus pour attribuer un score final au document ou au flux de données.

L'un des objectifs de la présente invention est d'offrir un procédé et un système permettant notamment de traiter des volumes de données importants.

L'invention repose notamment sur l'utilisation d'un codage via un processus de « scoring », c'est-à-dire un processus d'attribution d'un score à un élément ou un ensemble d'éléments, sans apprentissage de l'information non structurée en information structurée, en fonctionnement normal du procédé. Elle utilise aussi des étapes de modélisation et d'extraction de l'information non structurée, en vue d'analyser le contenu des textes, d'en extraire des informations pertinentes compte tenu des applications visées et de les représenter sous forme structurée.

L'invention concerne un procédé permettant d'attribuer un score à un élément sélectionné au sein d'une base de données ayant N éléments $D_i$ caractérisé en ce qu'il comporte au moins les étapes suivantes :

soit EG un nombre de paramètres $O_u$ retenus pour analyser ladite base de données, et B-1 : la fréquence maximum d'apparition associée à un paramètre,

➢ subdiviser l'intervalle [0, 1] en $EG$ intervalles $I_k^r$ égaux de largeur 1/$EG$

➢ définir pour 1≤$k$≤$EG$ des intervalles $I_k^r = \left[\dfrac{(k-1)}{EG}, \dfrac{k}{EG}\right[$ définis de la manière suivante : à chaque intervalle $I_k^r$ pour 1≤$k$≤($EG$-1) associer un intervalle à valeurs entières $I_k^e$ tel que : $I_k^e = \left[B^{(k-1)}, B^k\right[$

chaque élément $D_i$ de la base étant représentée par le vecteur de dimension $EG$ tel que :

$$\vec{D}_i = \left(\alpha_1, \alpha_2, \ldots, \alpha_{EG}\right)$$

Où $\alpha_u$ est la fréquence du paramètre $O_u$ dans l'élément $D_i$, avec $0 \leq \alpha_u \leq (B-1)$, le procédé exécute les étapes suivantes

➢ déterminer la valeur décimale $V_i$ de la note globale pour l'élément $D_i$ en utilisant la formule:

$$V_i = \sum_{k=1}^{EG} \alpha_k \times B^{(k-1)}$$

ladite valeur $V_i^G$ appartient à un des intervalles à bornes entières $I_k^e = \left[m_e, M_e\right[$ correspondant à un intervalle à valeurs décimales $I_k^r = \left[m_d, M_d\right[$ déterminer ensuite la note globale $N_i$ comprise dans l'intervalle [0, 1] pour l'élément $D_i$ considéré de la base de données en utilisant la relation :

$$N_i = m_d + \dfrac{V_i - m_e}{EG \times (M_e - m_e)}$$

$m_e$ et $M_e$ sont les bornes de l'intervalle à valeurs entières et $m_d$, $M_d$ les bornes de l'intervalle à valeurs décimales, puis ledit procédé exécute une étape au cours de laquelle un processus métier exécuté sur un poste client (26) va chercher des informations dans une base de données mémorisant les couples (élément, score) et en fonction de la valeur du couple (élément, score) génère une alerte.

Les éléments de la base de données se présentant sous la forme de données non structurées en données structurées, le procédé exécute, par exemple, une étape de transformation de données non structurées en données structurées.

Le dernier intervalle $I_{EG}^{r}$ peut être associé l'intervalle à valeurs entières

$$I_{EG}^{e} = \left[ B^{(EG-1)}, (B^{EG} - 1) \right[$$

Le procédé utilise comme base de données une base d'informations comportant plusieurs documents textuels.

L'invention concerne aussi un système pour mettre en oeuvre le procédé présentant les étapes caractéristiques exposées ci-dessus et caractérisé en ce qu'il comporte au moins les éléments suivants des moyens de détection des éléments contenus dans une base de données à analyser, des moyens d'analyse desdits éléments en exécutant les étapes du procédé selon la revendication 1, des moyens de stockage des éléments auxquels sont attribués un score, et leur score associé et un ou plusieurs postes clients exécutant des processus opérationnels et/ou décisionnels et en ce que lesdits processus vont chercher des informations dans lesdits moyens de stockage afin de contrôler les couples (éléments, score) et en fonction de la valeur du score, déclencher ou non une alerte.

Les éléments de la base de données sont, par exemple, des données non structurées et en ce qu'il comporte un module de mise en forme desdites données.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un exemple de mise en oeuvre du procédé selon l'invention,
- La figure 2, une architecture de système mettant en oeuvre le procédé,
- La figure 3, un exemple de modélisation CRM et la figure 4 un détail de la figure 3.

Afin de mieux faire comprendre les principes mis en oeuvre dans le procédé selon l'invention, l'exemple qui suit est donné dans le cas d'une analyse linguistique pour laquelle le but recherché est notamment de :

➢ coder des informations non structurées en informations structurées, lorsque ces dernières ne se présentent pas dans un format exploitable directement par le procédé de « scoring » selon l'invention,
➢ calculer un indicateur de positionnement dans le sens opinion qui sera associé à un client,
➢ faire la synthèse des données - données structurées et données non structurées - en corrélant cet indicateur aux informations structurées associées aux données non strutrurées analysées, par exemple, des données démographiques et des données comportementales (par exemple dans le cadre bancaire, une réclamation adressée à la banque s'effectuera via le nom ou l'identifieur du client associable aux données clients du SI (données démographiques et données comportementales). Après le traitement par la méthode, la réclamation du client sera représentée par un ensemble de données structurées, les données relevant de l'opinion ou du sentiment seront scorées, c'est-à-dire qu'une note ou score sera attribué aux données. Ce score sera associé aux données démographiques et données comportementales, ce qui permettra d'enrichir la connaissance et la compréhension du comportement du client. Si on pense à une application de type segmentation de clientèle, toujours dans le monde bancaire, l'analyse de tels profils permettra d'indentifier des segments de clients partageant des données démographiques, des données comportementales et des données d'opinion.

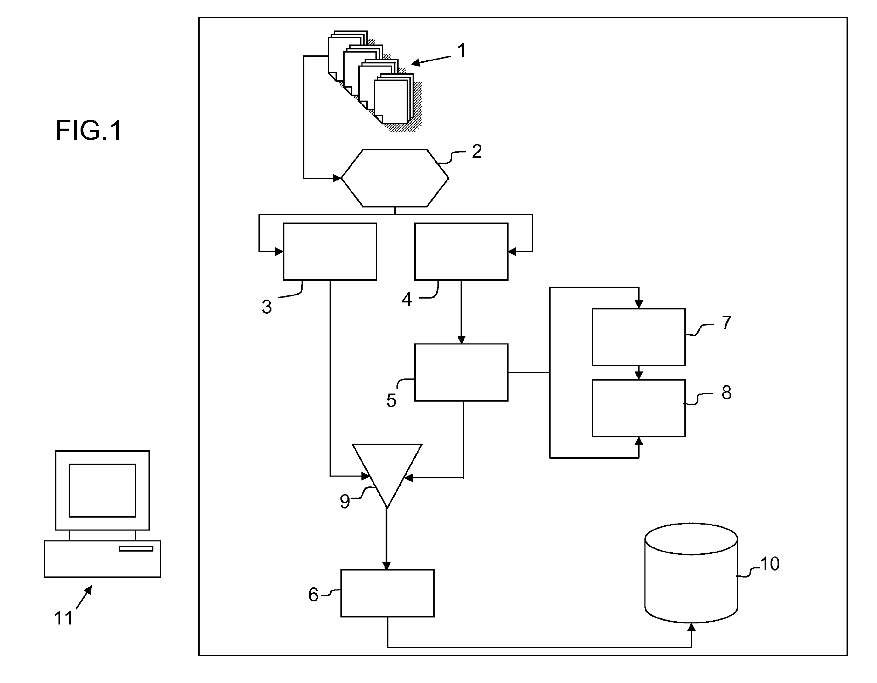

La figure 1 schématise un organigramme des étapes permettant la mise en oeuvre du procédé selon l'invention.

Les données d'entrée 1 qui peuvent comprendre des données structurées et des données non structurées, sont tout d'abord soumises à un prétraitement 2 ayant notamment pour fonction de différencier les informations de données structurées 3 de celles des données non structurées 4. Les données non structurées 4 vont faire l'objet d'un traitement 5, 7 et 8 qui va permettre d'obtenir des données se présentant sous un format structuré qui permet l'application de la méthode de « scoring » 6 selon le procédé de l'invention détaillé ci-après. Pour cela, le procédé de traitement fait appel à un modèle de données textuelles 7 et à des ressources lexicales et grammaticales 8 connues de l'Homme du métier.

Les données structurées initialement ou structurées après mise en oeuvre du traitement sont ensuite fusionnées 9 selon un procédé connu de l'Homme du métier avant d'être analysées en exécutant les étapes du procédé de « scoring » selon l'invention. Les données auxquelles le procédé a attribué un « score » sont ensuite mémorisées et stockées dans une base de données 10.

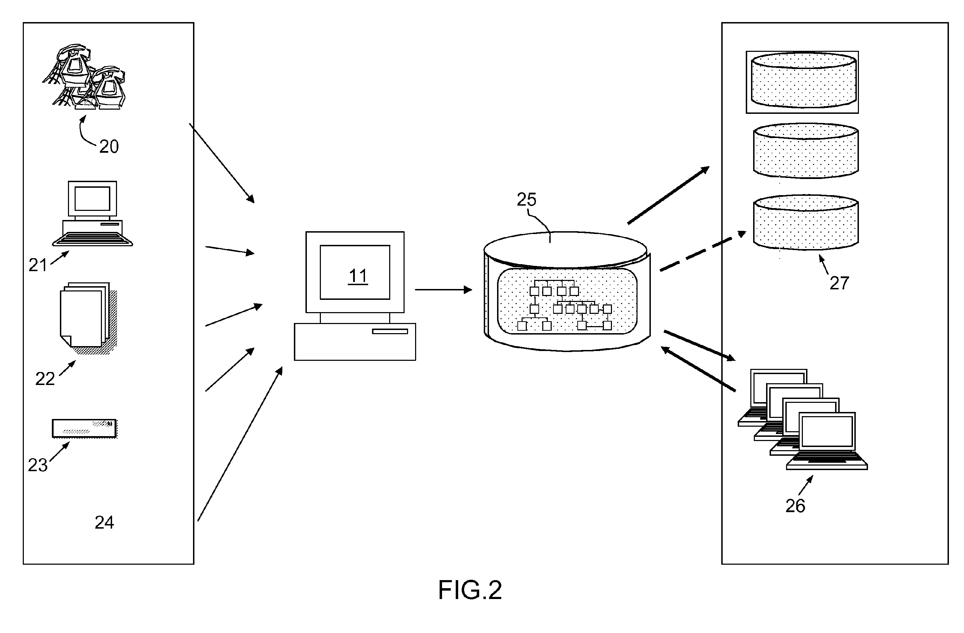

La figure 2 schématise un exemple de système selon l'invention comprenant une partie 30 comprenant différents capteurs d'informations, tels que des plate-forme téléphoniques 20, des messages issus de messageries 21, des enquêtes 22, des courriers 23 ou tout autre moyen 24 permettant d'obtenir et de capter des informations Les différents éléments ou informations sont transmis au serveur d'analyse 11 comprenant les différents modules décrits à la figure 1. Les données traitées et issues du serveur d'analyse sont transmises à une base de stockage de données 25. Ces données sont ensuite transmises à des processus décisionnels et/ou à des processus opérationnels exécutées sur des postes clients 26. Les processus métier vont chercher dans la base de données 25 les informations dont ils ont besoin pour être exécutés. Des exemples de processus métier sont donnés ci-après.

Comme processus métier, il est possible de mettre en oeuvre des processus décisionnels. Ceci correspond à des techniques connues sous le terme anglo-saxon de « profiling » en vue de cibler les clients en fonction de leurs données personnelles et de leurs opinions sur tel ou tel produits ou services, ou de leurs attentes, des techniques de segmentation de clientèle prenant en compte à la fois les données signalétiques et comportementales décrivant les clients et les opinions qu'ils ont exprimées sur tel ou tel produits ou services, etc....peuvent être utilisés.

Comme autre processus métier, il est aussi possible d'utiliser des processus opérationnels. Par exemple, dans le cadre de processus « CRM » ou dans le cadre d'un processus qualité, acheminer ou router de manière automatique et systématique tous les mails entrants associés à un score d'insatisfaction donné vers un service qui les traitera en priorité, dans le cadre d'un processus de gestion de crise, déclencher des alertes quand le score de gravité des évènements ou quand le score d'insatisfaction du citoyen atteint un seuil donné.

Mise en oeuvre de la méthode de « scoring »

Le procédé de scoring selon l'invention consiste notamment, dans l'exemple exposé à titre illustratif et nullement limitatif, à donner des scores de sentiments et/ou d'opinions exprimés dans un document donné. Une première étape consiste donc à déterminer quelles sont les données ou paramètres auxquels doit être attribuée une note ou score. Ces paramètres peuvent être représentés sous la forme de mots ou de portions de phrases dans un document, mais pourraient aussi, sans sortir du cadre de l'invention, concerner des paramètres issus de capteurs de mesure dans une application industrielle. En effet, il serait possible de considérer un ensemble de paramètres tels que la température, la pression, etc. pour lesquels un utilisateur souhaite obtenir leur poids et leur influence sur le déroulement d'un processus.

Une fois les paramètres déterminés, les étapes du procédé de scoring se déroulent de la manière décrite ci-après.

On notera $EG$ = nombre de paramètres retenus pour analyser un document, ou un phénomène industriel, les paramètres peuvent être les différents niveaux de d'insatisfaction ou de satisfaction ordonnés par ordre croissant, par exemple, ayant été cités par les différents éléments ou documents de la base de données à analyser. Si par exemple, il y a eu dans la base de données, 5 niveaux de d'insatisfaction et de satisfaction, O1, O2, O3, O4, 05, exprimés par les personnes ayant écrit les documents : par exemple :

- O1 : très mécontent
- O2 : mécontent
- O3 : content
- O4 : très content
- O5 : très très content

Alors on se trouve en présence de 5 paramètres d'opinion $O_u$ avec ($u$ = 1,2,3,4,5).

On notera ($B$-1): la fréquence maximum d'apparition d'un des paramètres, dont on tiendra compte dans le calculs,

Le procédé subdivise l'intervalle [0, 1] en $EG$ intervalles $I_k^r$ égaux de largeur 1/$EG$. ce qui conduit à définir des intervalles

$$I_k^r = \left[ \frac{(k-1)}{EG}, \frac{k}{EG} \right[$$

à chaque intervalle $I_k^r$ pour $1 \leq k \leq (EG\text{-}1)$est associé un intervalle à valeurs entières $I_k^e$ tel que : $I_k^e = \left[ B^{(k-1)}, B^k \right[$

pour le dernier intervalle $I_{EG}^r$ st associé l'intervalle à valeurs entières

$$I_{EG}^e = \left[B^{(EG-1)}, (B^{EG} - 1)\right[$$

A titre d'exemple, si le nombre de niveaux de gravité est égal à 5, i.e. (*EG* = 5) et si la fréquence maximum pouvant être prise en compte est 9, i.e. (*B* = 10), On aura à ce stade la correspondance suivante entre les intervalles :

| Correspondance entre intervalles | |
|---|---|
| Intervalle $I_k^r$ | Intervalle $I_k^e$ |
| $I_1^r = \left[0, \dfrac{1}{5}\right[$ | $I_1^r = [1,10[$ |
| $I_2^r = \left[\dfrac{1}{5}, \dfrac{2}{5}\right[$ | $I_2^r = [10,100[$ |
| $I_3^r = \left[\dfrac{2}{5}, \dfrac{3}{5}\right[$ | $I_3^r = [100,1000[$ |
| $I_4^r = \left[\dfrac{3}{5}, \dfrac{4}{5}\right[$ | $I_4^r = [1000,10000[$ |
| $I_5^r = \left[\dfrac{4}{5}, 1\right]$ | $I_5^r = [10000,99999]$ |

en représentant un document à analyser par le vecteur de dimension *EG* tel que :

$$\vec{D}_i = (\alpha_1, \alpha_2, \ldots, \alpha_{EG})$$

où $\alpha_u$ est la fréquence d'apparition du paramètre $O_u$ dans l'élément de la base de données ou le document $D_i$ (ou le nombre de fois où le niveau d'opinion a été cité dans le document), avec $0 \le \alpha_u \le (B-1)$, le procédé commence alors par :

déterminer la valeur décimale $V_i$ de la note globale pour cet élement de la base ou ce document en utilisant la formule :

$$V_i = \sum_{u=1}^{EG} \alpha_u \times B^{(u-1)}$$

cette valeur $V_i$ appartiendra à un des intervalles à bornes entières $I_k^e = \left[m_e, M_e\right[$ correspondant à un intervalle à valeurs décimales $I_k^r = \left[m_d, M_d\right[$ le procédé déterminera ensuite

la note globale $N_i$ pour l'élément ou le document considéré dans la base de données à analyser en utilisant la relation :

$$N_i = m_d + \frac{V_i - m_e}{EG \times (M_e - m_e)}$$

Le paramètre considéré dans le document est par exemple le paramètre de gravité.

Afin de faciliter la compréhension du lecteur, un exemple est donné

Supposons que l'on soit en présence du tableau suivant avec $D_i$ le document i dans la base de données, $O_u$ le paramètre pouvant apparaître dans un élément de la base de données:

|     | O1 | O2 | O3 | O4 | O5 |
|-----|----|----|----|----|----|
| D1  | 1  | 0  | 0  | 0  | 1  |
| D2  | 9  | 9  | 0  | 0  | 0  |
| D3  | 0  | 0  | 6  | 8  | 0  |
| D4  | 0  | 5  | 5  | 0  | 0  |
| D5  | 9  | 9  | 4  | 0  | 0  |
| D6  | 0  | 0  | 1  | 1  | 3  |

la fréquence maximum étant de 9, ($B$ =10), (EG = 5) (5 niveaux d'opinion) et N=6 (nombre de documents dans la base).

La valeur entière (score à valeur entière) pour le document D1 est :

$$V_1 = \sum_{k=1}^{5} \alpha_k \times 10^{(k-1)} = 1 + 0 + 0 + 0 + 10^4 = 10001 \quad ,$$

cette valeur appartient à l'intervalle $I_5^r = \left[10000, 99999\right]$, la valeur décimale $N_i$ correspondante appartiendra donc

à l'intervalle $I_5^r = \left[\dfrac{4}{5}, 1\right]$. En effet,

$$N_i = \frac{4}{5} + \frac{10001 - 10000}{5 \times (99999 - 10000)} = 0.8$$

La valeur entière (score à valeur entière) pour le document D3 est :

$$V_1 = \sum_{k=1}^{5} \alpha_k \times 10^{(k-1)} = 0 + 0 + 6 \times 10^2 + 8 \times 10^3 + 0 = 8600 \quad ,$$ cette valeur appartient à l'intervalle

$I_4^r = \left[1000, 10000\right[$, la valeur décimale $N_i$ correspondante appartiendra donc à l'intervalle $I_4^r = \left[\dfrac{3}{5}, \dfrac{4}{5}\right[$. En effet,

$$N_i = \frac{3}{5} + \frac{8600 - 1000}{5 \times (10000 - 1000)} = 0.77$$

Modélisation des données (mise en forme de données non-structurées en données structurées)

Le procédé exécute une étape de pré-processing des données initiales afin de les mettre dans un format de données structurées. Cette étape de pré-processing s'appuie sur des traitements linguistiques, dépendant de la modélisation des données

Le principe de modélisation utilisé permet notamment de prendre en compte le métier, la nature des données et les besoins d'analyse pour une application donnée. Il est proche des modèles de bases de données et donne à l'approche une valeur opérationnelle.

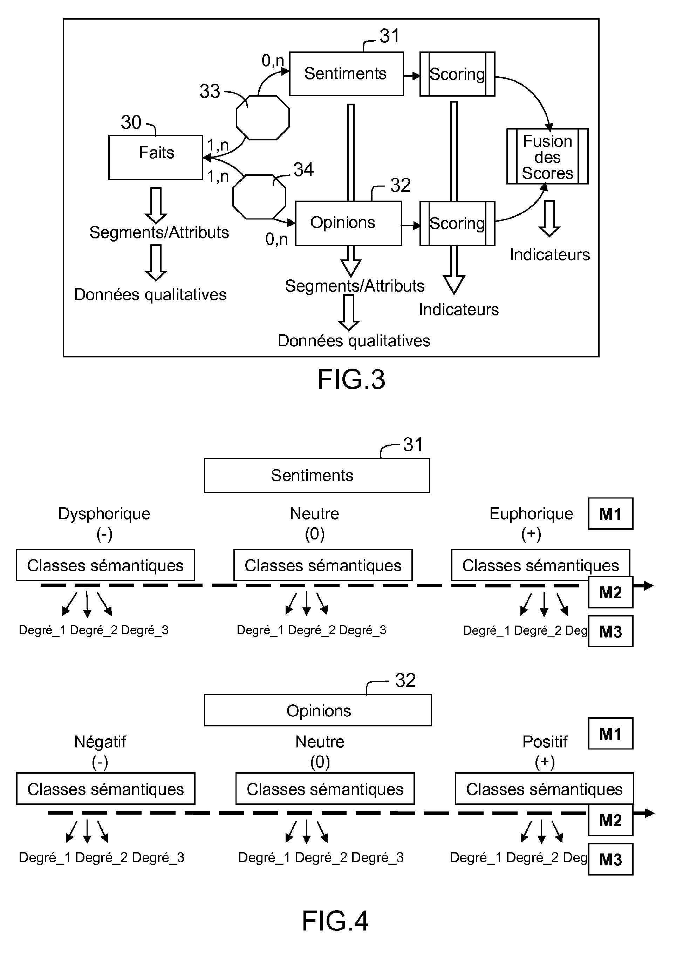

La figure 3 schématise différentes étapes exécutées pour modéliser un discours. La méthode s'appuie quel que soit le domaine traité et la nature des données à traiter sur une modélisation sous forme de dimensions ou paramètres du contenu des informations non structurées analysées. Ce choix en termes de modélisation permet de définir un composant « Modèle » dont la structure produit des résultats directement intégrables à un système de gestion de bases de données.

Sur la figure 3 est représenté un modèle d'analyse défini pour le domaine de la gestion des relations clients ou en abréviation anglo-saxonne CRM (Customer Relationship Management), ou la compréhension du client. Ce modèle permet notamment d'analyser les interactions clients/entreprise de type appels téléphoniques, messages électroniques, courriers de réclamations, enquêtes de satisfaction avec questions ouvertes.

Les paramètres retenus pour illustrer le procédé selon l'invention, sont par exemple les suivants :

➢ La dimension des faits ou (FAITS) 30 qui permet d'identifier l'énoncé du problème rencontré,
➢ La dimension des sentiments (SENTIMENTS) 31 qui permet d'identifier le point de vue particulier de l'énonciateur sur l'axe des valeurs affectives,
➢ La dimension des OPINIONS (/OPINIONS ) 32 permet d'identifier le point de vue particulier de l'énonciateur sur l'axe des valeurs intellectives.

En fonction de la finesse d'analyse attendue et des besoins applicatifs, cette structure à quatre dimensions peut être enrichie de nouvelles dimensions, telles que la dimension des besoins (BESOINS) 33 ou des attentes 34 exprimées par les clients, la dimension des compétiteurs (COMPETITEURS), etc.

La figure 4 pointe et détaille certaines dimensions de la figure 3. Par exemple, pour les dimensions SENTIMENTS 31 et OPINIONS 32, il est possible de définir 3 sous-dimensions lesquelles entretiennent entre elles une relation de dépendance hiérarchique :

La première représente la dimension des polarités avec 3 valeurs : Négatif, Neutre, Positif.

Sous la dimension des polarités M1, se trouve la dimension des classes sémantiques M2 qui permet d'organiser les sentiments et les opinions en classes, en fonction d'une typologie pré-définie.

Sous la dimension des classes sémantiques, se trouve la dimension des degrés M3 qui permet de sous-catégoriser les classes sémantiques en trois valeurs, en fonction d'un critère de degré ou d'intensité.

L'exemple relatif à un extrait d'une base de réclamations est donné à titre nullement limitatif pour illustrer cette démarche.

Les données d'entrée non structurées proviennent d'une transcription manuelle d'appels téléphoniques, par des télé-conseillers, par exemple :

« le client est extrêmement déçu par les nouveaux relevés de compte... »

Le modèle et les outils d'extraction d'information qui lui sont associés permettront d'annoter l'extrait de texte de la manière suivante :

« Le client est [extrêmement déçu] sentiment/négatif/déception/degré 3...... »

Certains textes complexes peuvent imposer une dégradation du modèle qui à titre d'exemple peut être du type (SENTIMENTS/Axe des polarités/Classes Sémantiques+ OPINIONS/Axe des polarités/Classes sémantiques).

Le système et le procédé selon l'invention décrits ci-dessus peuvent être mis en oeuvre et s'appliquer dans de nombreux domaines, par exemple : pour les Acteurs de la Veille (de tous type, ) les Acteurs du CRM, le Pilotage qualité, la Conduite et la surveillance de processus au sein d'une usine, par exemple, pondération de différents paramètres mesurés. Ils trouvent aussi leur utilité pour l'Analyse du risque en général : risque sanitaire, environnemental, etc. ...la Gestion de crise, le Renseignement, les Cabinets d'étude, de conseils et les Fournisseurs de produits et services.

**Revendications**

1. Procédé permettant d'attribuer un score à un élément sélectionné au sein d'une base de données ayant N éléments $D_i$ **caractérisé en ce qu'**il comporte au moins les étapes suivantes :

   soit EG un nombre de paramètres $O_u$ retenus pour analyser ladite base de
   données, et B-1: la fréquence maximum d'apparition associée à un paramètre,

   ➢ subdiviser l'intervalle [0, 1] en *EG* intervalles $I_k^r$ égaux de largeur 1/*EG*

   ➢ définir pour 1≤ *k* ≤ *EG* des intervalles $I_k^r = \left[ \dfrac{(k-1)}{EG}, \dfrac{k}{EG} \right[$ définis de la manière suivante : à chaque intervalle $I_k^r$ pour 1≤*k*≤(*EG*-1) associer un intervalle à valeurs entières $I_k^e$ tel que : $I_k^e = \left[ B^{(k-1)}, B^k \right[$

   chaque élément $D_i$ de la base étant représentée par le vecteur de dimension *EG* tel que :

   $$\vec{D}_i = \left( \alpha_1, \alpha_2, \ldots, \alpha_{EG} \right)$$

   Où $\alpha_u$ est la fréquence du paramètre $O_u$ dans l'élément $D_i$, avec 0≤$\alpha_u$ ≤ (*B*-1), le procédé exécute les étapes suivantes

   ➢ déterminer la valeur décimale $V_i$ de la note globale pour l'élément $D_i$ en utilisant la formule:

   $$V_i = \sum_{k=1}^{EG} \alpha_k \times B^{(k-1)}$$

   ladite valeur $V_i^G$ appartient à un des intervalles à bornes entières $I_k^e = \left[ m_e, M_e \right[$ correspondant à un intervalle à valeurs décimales $I_k^r = \left[ m_d, M_d \right[$ déterminer ensuite la note globale $N_i$ comprise dans l'intervalle [0, 1] pour l'élément $D_i$ considéré de la base de données en utilisant la relation :

   $$N_i = m_d + \frac{V_i - m_e}{EG \times (M_e - m_e)}$$

   $m_e$ et $M_e$ sont les bornes de l'intervalle à valeurs entières et $m_d$, $M_d$ les bornes de l'intervalle à valeurs décimales, puis
   ledit procédé exécute une étape au cours de laquelle un processus métier exécuté sur un poste client (26) va chercher des informations dans une base de données mémorisant les couples (élément, score) et en fonction de la valeur du couple (élément, score) génère une alerte.

2. Procédé selon la revendication 1 **caractérisé en ce que** les éléments de la base de données se présentant sous la forme de données non structurées en données structurées, le procédé exécute une étape de transformation de données non structurées en données structurées.

3. Procédé selon la revendication 1 **caractérisé en ce que** pour le dernier intervalle $I_{EG}^r$ est associé l'intervalle à valeurs entières $I_{EG}^e = \left[ B^{(EG-1)}, (B^{EG} - 1) \right[$

**4.** Procédé selon la revendication 1 **caractérisé en ce qu'**il utilise comme base de données une base d'informations comportant plusieurs documents textuels.

**5.** Système pour mettre en oeuvre le procédé selon la revendication 1 **caractérisé en ce qu'**il comporte au moins les éléments suivants des moyens de détection (20, 21, 22) des éléments contenus dans une base de données à analyser, des moyens d'analyse (11) desdits éléments en exécutant les étapes du procédé selon la revendication 1, des moyens de stockage (25) des éléments auxquels sont attribués un score, et leur score associé et un ou plusieurs postes clients (26) exécutant des processus opérationnels et/ou décisionnels et **en ce que** lesdits processus vont chercher des informations dans lesdits moyens de stockage afin de contrôler les couples (éléments, score) et en fonction de la valeur du score, déclencher ou non une alerte.

**6.** Système selon la revendication 5 **caractérisé en ce que** les éléments de la base de données sont des données non structurées et **en ce qu'**il comporte un module (5, 7, 8) de mise en forme desdites données.

FIG.1

FIG.2

**FIG.3**

**FIG.4**

Europäisches
Patentamt

European
Patent Office

Office européen
des brevets

## RAPPORT PARTIEL
## DE RECHERCHE EUROPEENNE

qui selon la règle 63 de la Convention sur le brevet
européen est consideré, aux fins de la procédure ultérieure,
comme le rapport de la recherche européenne

Numéro de la demande

EP 09 15 4320

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 672 444 A (AIR LIQUIDE [FR]) 21 juin 2006 (2006-06-21) * abrégé * ----- | 1,2,4-6 | INV. G06F17/30 G06Q10/00 G06F17/27 |
| X | US 2006/143025 A1 (JEFFERY ADRIAN [US] ET AL) 29 juin 2006 (2006-06-29) * abrégé * ----- | 1,2,4-6 | |
| D,A | US 7 249 312 B2 (JASPER ROBERT JOSEPH [US] ET AL) 24 juillet 2007 (2007-07-24) * abrégé * ----- | 1,2,4-6 | |

DOMAINES TECHNIQUES
RECHERCHES (IPC)

G06F

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Berlin | 16 avril 2009 | Lechenne, Laurence |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P04E08)

Europäisches
Patentamt

European
Patent Office

Office européen
des brevets

**RECHERCHE INCOMPLETE
FEUILLE SUPPLEMENTAIRE C**

Numéro de la demande

EP 09 15 4320

Revendications ayant fait l'objet de recherches incomplètes:
    1,2,4-6

Revendications n'ayant pas fait l'objet de recherches:
    3

Raison pour la limitation de la recherche:

Les revendications 1 à 6 présentes ont trait à un procédé/système défini (entre autre) au moyen de différents  paramètres et expressions non usuels.

La revendication 1 porte sur un procédé permettant d'attribuer un score à un élément.
La première étape consiste à déterminer une note globale pour un élément à l'aide de formules mathématiques (page 15, ligne 6 à page 16, ligne 3).
La dernière étape (page 16, lignes 4-7) consiste à mémoriser des couples "élément, score" et à générer une alerte en fonction de l'information "élément, score".

La relation entre "note globale" et "score" n'est  nullement décrite ni dans la revendication 1, ni dans la description.
L'utilisation de termes variés sans relation entre eux clairement définie laisse un doute quant à la signification des caractéristiques techniques de la revendication 1.

De même, l'homme du métier est confronté à deux définitions différentes de l'intervalle Ir, une première définition utilisant $(k-1)/EG$ et $k/EG$ comme bornes (page 15, ligne 11) et une seconde définition utilisant md et Md comme bornes (page 15, ligne 23). Aucune relation n'est fournie dans la description quant à ces deux définitions.
Le même problème est présent pour les deux définitions de l'intervalle à valeurs entières Ie (ligne 13 et ligne 23).
L'utilisation de plusieurs définitions d'une même variable, sans relation entre elles clairement définie, laisse un doute quant à la signification des caractéristiques techniques de la revendication 1.

Le paramètre (B-1) est défini comme étant "la fréquence maximum d'apparition associée à un paramètre" (page 15, lignes 7-8). Cette définition n'est pas claire.
En effet, (B-1) est la fréquence maximum d'apparition d'un des paramètres dans quel ensemble ?
L'homme du métier pourrait essayer de comprendre qu'il s'agit de la fréquence maximum d'apparition d'un des paramètres dans la "base de données" définie aux lignes 5 à 7 page 15. Cependant d'après la description le procédé est appliqué à divers ensembles:
- la base de données est "une base d'informations comportant plusieurs documents textuels" (page 5, lignes 16-17)
- "un document" (page 9 ligne 10, page 10 lignes 13-14 et page 11, ligne 7)

Dans le cas où la base de données est un document textuel, la définition de (B-1) n'a aucun sens puisque chaque paramètre a une seule fréquence d'apparition au sein d'un document. Ou bien s'agit-il de la fréquence du

Europäisches
Patentamt

European
Patent Office

Office européen
des brevets

**RECHERCHE INCOMPLETE**
**FEUILLE SUPPLEMENTAIRE C**

Numéro de la demande

EP 09 15 4320

paramètre qui apparaît le plus souvent ? Cela n'est pas clair, ni dans la revendication 1, ni dans la description.

L'utilisation de termes variés (base de données, document, élément...) sans relation entre eux clairement définie laisse un doute quant à la signification des caractéristiques techniques de la revendication 1.

Par conséquent l'objet de la revendication 1 n'est pas clairement défini. Les autres revendications 2 à 6 sont dépendantes ou se réfèrent à la revendication 1 et ne sont donc pas claires pour les mêmes raisons.

De plus, la caractéristique supplémentaire de la revendication 3 concerne la définition d'un des intervalles à valeur entière et ne peut être comprise.

Le défaut de clarté est tel qu'une recherche significative portant sur l'ensemble de l'objet revendiqué dans les revendications 1-6 n'a pas pu être effectuée (article 84 CBE et règle 63 CBE).
Par conséquent, la recherche a été limitée aux caractéristiques de la revendication 1 pouvant être comprises par l'homme du métier, à savoir:
- Un procédé comprenant les étapes suivantes:
- une étape d'attribution d'un score à un élément sélectionné au sein d'une base de donnéesayant N éléments Di;
- une étape au cours de laquelle un processus métier exécuté sur un poste client va chercher des informations dans une base de données mémorisant les couples "élément, score" et, en fonction de la valeur du couple "élément, score" génère une alerte.

Les revendications 1, 2 et 4 à 6 ont donc été partiellement recherchées. La revendication 3 n'a pas pu être recherchée.

**ANNEXE AU RAPPORT DE RECHERCHE EUROPEENNE
RELATIF A LA DEMANDE DE BREVET EUROPEEN NO.**

EP 09 15 4320

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2009

| Document brevet cité au rapport de recherche | | Date de publication | Membre(s) de la famille de brevet(s) | | Date de publication |
|---|---|---|---|---|---|
| EP 1672444 | A | 21-06-2006 | AT<br>CA<br>CN<br>DE<br>ES<br>FR<br>US | 375535 T<br>2528900 A1<br>1790202 A<br>602005002818 T2<br>2293511 T3<br>2879769 A1<br>2006155514 A1 | 15-10-2007<br>16-06-2006<br>21-06-2006<br>17-07-2008<br>16-03-2008<br>23-06-2006<br>13-07-2006 |
| US 2006143025 | A1 | 29-06-2006 | AUCUN | | |
| US 7249312 | B2 | 24-07-2007 | US | 2004049478 A1 | 11-03-2004 |

EPO FORM P0460

Pour tout renseignement concernant cette annexe : voir Journal Officiel de l'Office européen des brevets, No.12/82

**EP 2 105 852 A1**

**RÉFÉRENCES CITÉES DANS LA DESCRIPTION**

**Documents brevets cités dans la description**

- US 7249312 B